(19) Europäisches Patentamt
European Patent Office
Office européen des brevets

(11) **EP 4 241 900 A1**

(12) **EUROPEAN PATENT APPLICATION**
published in accordance with Art. 153(4) EPC

(43) Date of publication:
**13.09.2023   Bulletin 2023/37**

(21) Application number: **22864805.1**

(22) Date of filing: **22.04.2022**

(51) International Patent Classification (IPC):
**B22F 1/05** *(2022.01)*      **B22F 9/08** *(2006.01)*
**C22C 1/02** *(2006.01)*

(52) Cooperative Patent Classification (CPC):
**B22F 1/05; B22F 9/08; C22C 1/02;** Y02P 10/20

(86) International application number:
**PCT/KR2022/005772**

(87) International publication number:
**WO 2023/033296 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.09.2021   KR 20210117350**
**08.10.2021   KR 20210134003**

(71) Applicant: **LS Cable & System Ltd.
Anyang-si, Gyeonggi-do 14119 (KR)**

(72) Inventors:
• **KIM, Chul Hyun
Anyang-si, Gyeonggi-do 14102 (KR)**
• **KIM, Sangyum
Anyang-si, Gyeonggi-do 14102 (KR)**
• **KANG, Min Su
Gunpo-si, Gyeonggi-do 15812 (KR)**
• **YOO, Hyun Ho
Seoul 04315 (KR)**

(74) Representative: **K&L Gates LLP
Karolinen Karree
Karlstraße 12
80333 München (DE)**

(54) **AMORPHOUS COPPER MATERIAL FOR ELECTROLYTIC COPPER FOIL AND MANUFACTURING METHOD THEREFOR**

(57)     The present invention relates to an amorphous copper material for an electrolytic copper foil and a manufacturing method therefor. Specifically, the present invention relates to an amorphous copper material for an electrolytic copper foil and a manufacturing method therefor, wherein the amorphous copper material shows not only an excellent dissolution function when dissolved in an electrolyte to prepare an electrolytic copper foil, but also secures working stability upon manufacture of electrolytic copper foil and is simple in manufacturing process, thus enabling cost reduction.

Fig. 3

**Description**

[FIELD OF THE INVENTION]

The present invention relates to an indeterminate copper material for electrolytic copper foil and a preparation method thereof. Specifically, the present invention relates to an indeterminate copper material for electrolytic copper foil, which exhibits excellent dissolution performance when dissolved in an electrolyte to manufacture electrolytic copper foil, contributes to securing work stability during the manufacture of electrolytic copper foil, and is simple to prepare, thereby reducing manufacturing costs, and a preparation method thereof.

[BACKGROUND ART]

An electrolytic copper may be manufactured by a continuous plating method of obtaining precipitated copper in the form of copper foil by rotating a large titanium drum as a cathode in an electrolyte, e.g., a copper sulfate solution, at a lower speed, and is used, for example, for a copper-laminated plate for a printed circuit board or a building material, and particularly, a negative plate of a secondary battery.

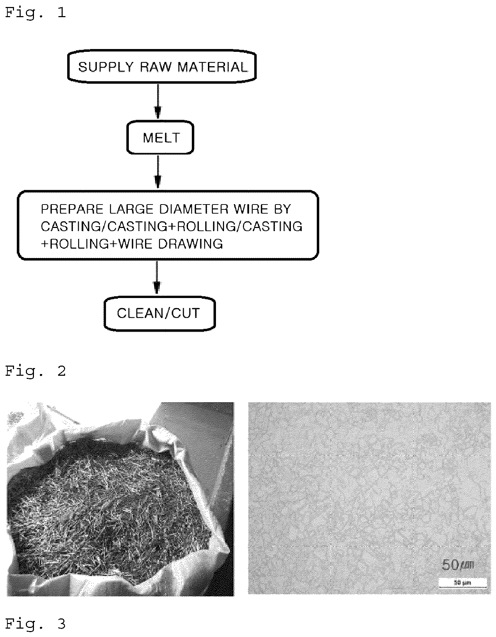

FIG. 1 is a flowchart of a process of preparing a raw material of a linear copper material for electrolytic copper foil of the related art. FIG. 2 is a photograph of the appearance and microstructure of a cut copper wire rod manufactured during preparation of a raw material of a linear copper material for electrolytic copper foil of the related art.

As shown in FIG. 1, a raw material of a linear copper material for electrolytic copper foil may be prepared by a method including supplying a raw material such as an electrolytic copper or a copper scrap, forming a wire rod of the raw material by casting, casting and rolling, or casting, rolling and wire drawing, and cleaning and cutting the wire rod. The electrolytic copper foil may be manufactured by dissolving the cut linear copper material, which is a raw material of electrolytic copper foil, in a sulfuric acid solution serving as an electrolyte.

In a preparation method of electrolytic copper foil of the related art, a cut copper wire rod, which is a linear copper material as shown in FIG. 2, is used as a raw material of electrolytic copper foil. The cut linear copper material is prepared by rolling, wire drawing, and cutting and thus is exposed to oils such as rolling oil and wire drawing oil during rolling and wire drawing. Accordingly, a cleaning process should be performed to remove grease. Therefore, the preparation method is complicated, thus increasing manufacturing costs of electrolytic copper foil.

Generally, the cut linear copper material is prepared in a form having a size of 2 to 4 mm in diameter and 30 to 100 mm in length to improve dissolution performance for the electrolyte. In this case, the cut linear copper material is likely to leak through a bottom of a plate which is provided below a water tank of a dissolver and in which a hole having a diameter of 10 mm is formed to circulate the electrolyte or supply air during dissolution of the electrolyte, thereby reducing workability.

Furthermore, the linear copper material is formed in a size of about 5 um on average through grain refinement after continuous casting, rolling, and wire drawing, as shown in FIG. 2. Oxidation, i.e., passivation, of a surface of the linear copper material may accelerate due to high grain boundary density, thereby reducing dissolution performance for the electrolyte.

Therefore, there is an urgent need for a copper material for electrolytic copper foil, which exhibits excellent dissolution performance when dissolved in an electrolyte to manufacture electrolytic copper foil, contributes to securing work stability during the manufacture of the electrolytic copper foil, and is simple to prepare, thereby reducing manufacturing costs, and a preparation method thereof.

[DETAILED DESCRIPTION OF THE INVENTION]

[TECHNICAL PROBLEM]

The present invention is directed to providing an indeterminate copper material for electrolytic copper foil, which exhibits excellent dissolution performance when dissolved in an electrolyte, and a preparation method thereof.

The present invention is also directed to providing an indeterminate copper material that contributes to securing work stability during manufacture of electrolytic copper foil and that is simple to prepare, thereby reducing manufacturing costs of electrolytic copper foil, and a preparation method thereof.

[TECHNICAL SOLUTION]

To achieve these objects, the present invention provides an indeterminate copper material for electrolytic copper foil, wherein an average grain size is in a range of 50 to 300 $\mu$m.

Further, the present invention provides the indeterminate copper material, wherein bulk density is in a range of 1.0 to 3.0 g/cm$^3$ and is defined by the following Equation 1:

```
[Equation 1]

bulk  density  (g/cm³)=total  mass  of  indeterminate  copper

material (g)/1000 cm³,
```

wherein total mass of indeterminate copper material denotes total mass of the indeterminate copper material filling a cubic box having a size of 10 cm×10 cm×10 cm in width, length and height.

Meanwhile, the present invention provides the indeterminate copper material, wherein a longest axis among long axes on a cross section of the indeterminate copper material is 10 mm or more, and a shortest axis among short axes on the cross section is 5 mm or less.

Further, the present invention provides the indeterminate copper material, wherein the longest axis is in a range of 10 to 75 mm, and the shortest axis is in a range of 1 to 5 mm.

Meanwhile, the present invention provides a preparation method of the indeterminate copper material, comprising: a) supplying a copper raw material; b) melting the copper raw material; and c) preparing an indeterminate copper material by melting the copper raw material into molten copper and casting the molten copper.

Further, the present invention provides the preparation method, wherein c) comprises preparing an indeterminate copper material by dispersing the molten copper, which is melted from the copper raw material, in the form of particles and cooling the molten copper while participating the molten copper in water contained in a water tank.

Meanwhile, the present invention provides the preparation method, wherein c) comprises preparing the indeterminate copper material by dispersing the molten copper, which is melted from the copper raw material, in the form of particles by dropping the molten copper from a molten metal nozzle to an impaction plate on the water tank containing water, and cooling the molten copper while precipitating the molten copper in the water in the water tank.

Further, the present invention provides the preparation method, wherein a melting temperature of the molten copper is in a range of 1,090 to 1,400 °C.

Meanwhile, the present invention provides the preparation method, wherein a distance between a discharge port of the molten metal nozzle and an upper surface of the impaction plate is in a range of 0.3 to 1.0 m.

Further, the present invention provides the preparation method of claim 5, wherein oxygen content of the molten copper is in a range of 20 to 1,000 ppm.

[EFFECT OF THE INVENTION]

The indeterminate copper material for electrolytic copper foil according to the present invention achieves an excellent effect, which exhibits excellent dissolution performance, such as a high dissolution rate and a high dissolution content, when dissolved in an electrolyte by controlling a specific bulk density, grain size and shape of the indeterminate copper material.

Furthre, the indeterminate copper material for electrolytic copper foil according to the present invention achieves an excellent effect, which contributes to securing work stability during manufacture of electrolytic copper foil and that is simple to prepare, since rolling, wire drawing, and cutting are not needed to manufacture the indeterminate copper material, thereby reducing manufacturing costs of electrolytic copper foil.

[BRIEF DESCRIPTION OF THE DRAWINGS]

FIG. 1 is a flowchart of a process of preparing a linear copper material for electrolytic copper foil of the related art;

FIG. 2 is a photograph of the appearance of microstructure of a linear copper material for electrolytic copper foil of the related art;

FIG. 3 is a flowchart of a process of preparing an indeterminate copper material for electrolytic copper foil according to the present invention;

FIG. 4 is a photograph of the appearance and microstructure of an indeterminate copper material prepared by the process of FIG. 3;

FIG. 5 is a schematic view of a casting device used in the process of preparing an indeterminate copper material for electrolytic copper foil of FIG. 3; and

FIG. 6 illustrates a form of a copper material filling a cubic acrylic box to measure bulk density.

[EMBODIMENTS OF THE INVENTION]

Hereinafter, embodiments of the present invention will be described in detail with reference to the accompanying drawings. The present invention is, however, not limited thereto and may be embodied in many different forms. Rather, the embodiments set forth herein are provided so that this disclosure may be thorough and complete and fully convey the scope of the invention to those skilled in the art.

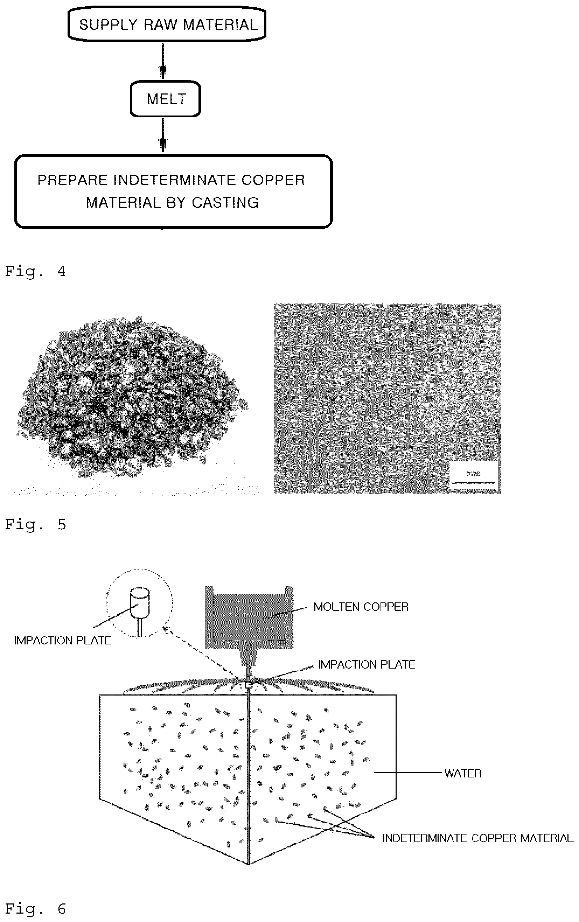

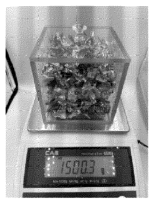

FIG. 3 is a flowchart of a process of preparing an indeterminate copper material for electrolytic copper foil according to the present invention. FIG. 4 is a photograph of the appearance and microstructure of an indeterminate copper material prepared by the process of FIG. 3. FIG. 5 is a schematic view of a casting device used in the process of preparing an indeterminate copper material for electrolytic copper foil of FIG. 3. FIG. 6 illustrates a form of a copper material filling a cubic acrylic box to measure bulk density.

As shown in FIG. 3, the indeterminate copper material for electrolytic copper foil may be prepared by a preparation method including the following operations a) to c):

a) supplying a raw material such as an electrolytic copper or scrap,
b) melting the supplied raw material, and
c) preparing an indeterminate copper material by casting the melted raw material.

Operation C) above may be performed using the casting device of FIG. 5. As shown in FIG. 5, an indeterminate copper material may be prepared by dropping refined copper, which is melted at 1,090 °C or more, and preferably, 1,090 to 1,400 °C, from a molten metal nozzle onto an impaction plate on a water tank containing water. The dropped molten copper is dispersed in all directions in the form of indeterminate particles having no specific shape due to impact when colliding against the impaction plate and is cooled while being precipitated in the water in the water tank.

Here, when a molten temperature of the molten copper is less than 1,090 °C, the molten copper may coagulate earlier than expected, thus blocking a discharge port of the molten metal nozzle or causing the dropped copper to be fused on the impaction plate, whereas when the molten temperature of the molten copper is greater than 1,400 °C, the molten copper dispersed in the form of particles in all directions when dropped on the impaction plate may be fused on the impaction plate, thereby forming an excessively coarse copper material.

In addition, a size of an indeterminate copper material to be generated may be controlled by adjusting a distance between the discharge port of the molten metal nozzle through which the molten copper is discharged and an upper surface of the impaction plate to be 0.3 to 1.5 m from the bottom of a molten metal tank containing the molten copper.

Here, when the distance between the discharge port of the molten metal nozzle and the upper surface of the impaction plate is less than 0.3 m, the molten copper may not be sufficiently scattered on the impaction plate, thus forming an excessively coarse copper material, whereas when the distance between the discharge port of the molten metal nozzle and the upper surface of the impaction plate is greater than 1.5 m, the molten copper may be scattered in an extremely minute form on the impaction plate, thus forming an extremely minute indeterminate copper material.

Furthermore, an oxygen content of a molten metal of the molten copper may be adjusted to 20 to 1,000 ppm. Here, when the oxygen content of the molten metal is less than 20 ppm, a large amount of hydrogen may be introduced into the molten metal, thus making it difficult to control a form of an indeterminate copper material formed of the scattered molten copper, whereas when the oxygen content of the molten metal is greater than 1,000 ppm, a large amount of oxides may be generated during the coagulation of the indeterminate copper material through cooling, thus making it difficult to control the form of the indeterminate copper material.

An indeterminate copper material for electrolytic copper foil of the present invention, which is prepared by the preparation method of the above-described embodiment, may be understood to mean a copper material having an indeterminate shape that cannot be defined as a specific shape such as a linear or circular shape.

Meanwhile, electrolytic copper foil may be manufactured by dissolving the indeterminate copper material prepared as described above in a sulfuric acid electrolyte. As described above, unlike a linear copper material of the related art, rolling, wire drawing, and cutting are not needed to manufacture an indeterminate copper material, and especially, rolling oil and wire drawing oil, which are needed for rolling and wire drawing, are not used. Thus, a process may be very simplified, thereby greatly reducing manufacturing costs of electrolytic copper foil.

Here, as shown in FIG. 4, the indeterminate copper material has a large average grain size of 50 to 300 μm, and preferably, a range of 150 to 250 μm, and thus has a low grain boundary density, thus securing sufficient dissolution performance for an electrolyte due to surface delay.

In contrast, the linear copper material of the related art shown in FIG. 2 has a small average grain size of less than 50 μm and thus has a high grain boundary density, thus reducing dissolution performance for an electrolyte due to acceleration of the passivation of a surface of the linear copper material.

The large grain size of the indeterminate copper material may be achieved by quickly cooling the molten copper in water as shown in FIG. 5 without rolling and wire drawing, unlike the linear copper material of the related art.

Here, the average grain sizes may be measured by inputting photographs of a microstructure of the indeterminate copper material and a microstructure of the linear copper material, which are taken by an optical microscope or an electron microscope, into general-purpose software such as Image Analyzer but may be measured in other various ways known to those of ordinary skill in the art.

In addition, the indeterminate copper material may be in the form of indeterminate particles having an indeterminate shape as shown in FIG. 4 and have bulk density of 1.0 to 3.0 g/cm$^3$. The inventors of the present application have completed the present invention by experimentally confirming that when a prepared indeterminate copper material had a specific grain size and preferably additionally had specific bulk density, the indeterminate copper material exhibited improved dissolution performance, such as a high dissolution rate and a high dissolution content, when dissolved in an electrolyte.

Here, the bulk density may be understood to mean total mass of the copper material relative to the volume of a cubic box having a size of 10 cm×10 cm×10 cm in width, length, and height, and may be defined by Equation 1 below.

$$[Equation\ 1]$$

$$bulk\ density\ (g/cm^3) = total\ mass\ of\ copper\ material$$

$$(g)/1000\ cm^3,$$

wherein "total mass of copper material" denotes total mass of a copper material filling a cubic box having a size of 10 cm×10 cm×10 cm in width, length and height.

The total mass of the copper material may be calculated by dropping the copper material into a cubic acrylic box having a size of 10 cm×10 cm×10 cm in width, length, and height from a height of 5 cm from the top of the cubic acrylic box, so that the copper material may fill up to the top of the cubic acrylic box and a cover of the cubic acrylic box may be completely closed. The width, length, and height of the cubic acrylic box were based dimensions of the inside of the box, and in an embodiment of the present invention, an acrylic box having a thickness of 5 mm was used but a material and thickness of the box are not particularly limited provided that a cubic shape of the box can be maintained.

In particular, when the bulk density of the indeterminate copper material is less than 1.0 g/cm$^3$, a surface area of the indeterminate copper material in contact with an electrolyte may increase but the amount of copper actually dissolved in the electrolyte may be insufficient, whereas when the bulk density is greater than 3.0 g/cm$^3$, the amount of copper actually dissolved in the electrolyte may be sufficient but a surface area of the indeterminate copper material in contact with the electrolyte may be less than a reference level, thereby greatly reducing a dissolution rate.

In addition, a longest axis among long axes on a cross section of the indeterminate copper material may be 10 mm or more, and preferably 10 to 75 mm, and a shortest axis among short axes on the cross section of the indeterminate copper material may be 5 mm or less, and preferably 1 to 5 mm.

When the longest axis is less than 10 mm, the copper material may leak through a bottom of a plate which is located below a water tank containing the electrolyte and in which a hole having a diameter of 10 mm is formed to circulate the electrolyte and supply air, whereas when the longest axis is greater than 75 mm, the surface area of the copper material may not be sufficient, thus greatly reducing dissolution performance for the electrolyte. When the shortest axis is greater than 5 mm, a specific surface area of the copper material may be insufficient, thus greatly reducing dissolution performance for the electrolyte.

Here, the longest and shortest axes of the indeterminate copper material may be measured using a tool such as a vernier caliper but a type of tool is not particularly limited as long as a length can be measured by the tool.

(Example)

1. Preparation examples of copper material

Indeterminate copper materials of examples 1 to 3 each having characteristics shown in Table 1 below were prepared using the casting device of FIG. 5 by adjusting a temperature of a molten metal of molten copper and a distance to an impaction plate from a discharge port of a molten metal nozzle through which the molten copper is discharged.

For comparison with the above-described examples, linear copper materials of comparative examples 1 to 3 were prepared by casting, rolling and wire-drawing and cleaning and cutting a copper raw material.

[Table 1]

|  | Example 1 | Example 2 | Example 3 | Comparative example 1 | Comparative example 2 | comparative example 3 |
|---|---|---|---|---|---|---|
| average grain size ($\mu$m) | 189 | 195 | 177 | 5.8 | 7.0 | 10.4 |
| size (shortest axis×longest axis (mm)) | 1x50 | 3x50 | 5x50 | 3.1 (diameter) x80 (length) | 4.2 (diameter) x80 (length) | 8.0 (diameter) x90 (length) |
| bulk density (g/cm$^3$) | 1.88 | 1.63 | 2.48 | 3.89 | 3.95 | 3.87 |

2. Evaluation of dissolution performance of copper material

Copper materials according to examples and comparative examples were immersed in 1L of an 80 °C sulfuric acid solution having a density of 150g/L for 48 hours. Thereafter, the weight of each sample was measured and a meltage of each sample was calculated and recorded in Table 2 below.

[Table 2]

| classification | Example 1 | Example 2 | Example 3 | Comparative example 1 | Comparative example 2 | comparative example 3 |
|---|---|---|---|---|---|---|
| weight (g) before dissolved | 121.0 | 122.1 | 120.3 | 124.0 | 125.4 | 121.1 |
| weight (g) after dissolved | 108.3 | 113.6 | 113.8 | 119.6 | 121.5 | 120.4 |
| meltage (g/L) | 12.7 | 8.5 | 6.5 | 4.4 | 3.9 | 0.7 |

As shown in Table 2, it was confirmed that dissolution performance such as a dissolution rate and a meltage of the indeterminate copper materials of examples 1 to 3 each having a certain grain size and a shape of a specific size and accurately controlled bulk density was greatly improved.

In contrast, it was confirmed that in the case of the existing linear copper materials of comparative examples 1 to 3, bulk density was greater than a reference level and thus a surface area in contact with an electrolyte was less than a reference level, thereby greatly reducing a dissolution rate, and grain boundary density was high due to a small average grain size, thus accelerating surface passivation and reducing dissolution performance for the electrolyte.

While the present invention has been described above with respect to exemplary embodiments thereof, it would be understood by those of ordinary skilled in the art that various changes and modifications may be made without departing from the technical conception and scope of the present invention defined in the following claims. Thus, it is clear that all modifications are included in the technical scope of the present invention as long as they include the components as claimed in the claims of the present invention.

**Claims**

1.  An indeterminate copper material for electrolytic copper foil, wherein an average grain size is in a range of 50 to 300 $\mu$m.

2.  The indeterminate copper material of claim 1, wherein bulk density is in a range of 1.0 to 3.0 g/cm$^3$ and is defined by the following Equation 1:

[Equation 1]

$$\text{bulk density (g/cm}^3\text{)} = \text{total mass of indeterminate copper material (g)} / 1000 \text{ cm}^3,$$

wherein total mass of indeterminate copper material denotes total mass of the indeterminate copper material filling a cubic box having a size of 10 cm×10 cm×10 cm in width, length and height.

3. The indeterminate copper material of claim 1 or 2, wherein a longest axis among long axes on a cross section of the indeterminate copper material is 10 mm or more, and
a shortest axis among short axes on the cross section is 5 mm or less.

4. The indeterminate copper material of claim 3, wherein the longest axis is in a range of 10 to 75 mm, and the shortest axis is in a range of 1 to 5 mm.

5. A preparation method of the indeterminate copper material of claim 1 or 2, comprising:

   a) supplying a copper raw material;
   b) melting the copper raw material; and
   c) preparing an indeterminate copper material by melting the copper raw material into molten copper and casting the molten copper.

6. The preparation method of claim 5, wherein c) comprises preparing an indeterminate copper material by dispersing the molten copper, which is melted from the copper raw material, in the form of particles and cooling the molten copper while participating the molten copper in water contained in a water tank.

7. The preparation method of claim 6, wherein c) comprises preparing the indeterminate copper material by dispersing the molten copper, which is melted from the copper raw material, in the form of particles by dropping the molten copper from a molten metal nozzle to an impaction plate on the water tank containing water, and cooling the molten copper while precipitating the molten copper in the water in the water tank.

8. The preparation method of claim 5, wherein a melting temperature of the molten copper is in a range of 1,090 to 1,400 °C.

9. The preparation method of claim 7, wherein a distance between a discharge port of the molten metal nozzle and an upper surface of the impaction plate is in a range of 0.3 to 1.5 m.

10. The preparation method of claim 5, wherein oxygen content of the molten copper is in a range of 20 to 1,000 ppm.

Fig. 1

```
┌─────────────────────────┐
│  SUPPLY RAW MATERIAL    │
└─────────────────────────┘
             │
             ▼
      ┌─────────────┐
      │    MELT     │
      └─────────────┘
             │
             ▼
┌───────────────────────────────────┐
│ PREPARE LARGE DIAMETER WIRE BY     │
│ CASTING/CASTING+ROLLING/CASTING    │
│ +ROLLING+WIRE DRAWING              │
└───────────────────────────────────┘
             │
             ▼
      ┌─────────────┐
      │  CLEAN/CUT  │
      └─────────────┘
```

Fig. 2

Fig. 3

Fig. 4

Fig. 5

Fig. 6

<table>
<tr><td colspan="2" align="center">**INTERNATIONAL SEARCH REPORT**</td><td>International application No.<br>**PCT/KR2022/005772**</td></tr>
</table>

| A. | CLASSIFICATION OF SUBJECT MATTER |
|---|---|

**B22F 1/05**(2022.01)i; **B22F 9/08**(2006.01)i; **C22C 1/02**(2006.01)i

According to International Patent Classification (IPC) or to both national classification and IPC

| B. | FIELDS SEARCHED |
|---|---|

Minimum documentation searched (classification system followed by classification symbols)

B22F 1/05(2022.01); B22F 1/00(2006.01); B22F 9/08(2006.01); B22F 9/24(2006.01); H01B 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 구리(copper), 용융(melt), 충돌(shock), 크기(size), 아토마이징(atomizing), 벌크밀도(bulk density)

| C. | DOCUMENTS CONSIDERED TO BE RELEVANT |
|---|---|

| Category* | Citation of document, with indication, where appropriate, of the relevant passages | Relevant to claim No. |
|---|---|---|
| X<br>Y<br>A | JP 2009-287044 A (MITSUI MINING & SMELTING CO., LTD.) 10 December 2009 (2009-12-10)<br>See paragraphs [0018], [0021] and [0025]-[0026]. | 1<br>5-10<br>2-4 |
| Y | JP 11-131111 A (TOKYO SEIKO CO., LTD.) 18 May 1999 (1999-05-18)<br>See paragraph [0014], claims 1 and 3 and figure 1. | 5-10 |
| Y | JP 2002-343135 A (MITSUI MINING & SMELTING CO., LTD.) 29 November 2002 (2002-11-29)<br>See claim 1. | 10 |
| A | JP 6192639 B2 (UNITIKA LTD.) 06 September 2017 (2017-09-06)<br>See paragraph [0016] and claim 1. | 1-10 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 August 2022** | **09 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
|---|
| **PCT/KR2022/005772** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2016-0048262 A (NANO KOREA et al.) 04 May 2016 (2016-05-04)<br>    See paragraph [0037]. | 1-10 |

Form PCT/ISA/210 (second sheet) (July 2019)

**INTERNATIONAL SEARCH REPORT**
Information on patent family members

International application No.

**PCT/KR2022/005772**

| Patent document cited in search report | | | Publication date (day/month/year) | Patent family member(s) | | | Publication date (day/month/year) |
|---|---|---|---|---|---|---|---|
| JP | 2009-287044 | A | 10 December 2009 | JP | 5361247 | B2 | 04 December 2013 |
| JP | 11-131111 | A | 18 May 1999 | None | | | |
| JP | 2002-343135 | A | 29 November 2002 | JP | 4342746 | B2 | 14 October 2009 |
| JP | 6192639 | B2 | 06 September 2017 | JP | WO2013-187384 | A1 | 04 February 2016 |
| | | | | US | 2015-0147584 | A1 | 28 May 2015 |
| | | | | WO | 2013-187384 | A1 | 19 December 2013 |
| KR | 10-2016-0048262 | A | 04 May 2016 | None | | | |

Form PCT/ISA/210 (patent family annex) (July 2019)